# EUROPÄISCHE PATENTSCHRIFT

(11) **EP 1 828 673 B1**
(45) Veröffentlichungstag und Bekanntmachung des Hinweises auf die Patenterteilung: **18.11.2009**
(21) Anmeldenummer: 05784048.0
(22) Anmeldetag: 17.09.2005
(51) Int. Cl.: F21S 8/12, B60Q 1/00, G02B 6/00, F21V 7/00

(54) **FAHRZEUGSCHEINWERFER**
VEHICLE HEADLIGHT
PHARE DE VEHICULE AUTOMOBILE

(30) Priorität: 26.11.2004 DE 102004057131
(43) Veröffentlichungstag der Anmeldung: 05.09.2007
(73) Patentinhaber: Bayerische Motoren Werke Aktiengesellschaft, 80809 München (DE)
(72) Erfinder: ERDL, Helmut, 83569 Vogtareuth (DE)
(74) Vertreter: Mayer-Martin, Christian
(86) Internationale Anmeldenummer: PCT/EP2005/010037
(87) Internationale Veröffentlichungsnummer: WO 2006/056254

(56) Entgegenhaltungen:
- EP-A- 0 501 669
- EP-A- 1 152 188
- EP-A- 1 557 605
- WO-A-99/11968
- WO-A-2005/039924
- DE-A1- 10 040 302
- DE-A1- 10 115 868
- DE-A1- 10 218 437
- US-A- 5 574 328

## Beschreibung

Die Erfindung betrifft ein Fahrzeugscheinwerfer mit einem Reflektor, der am Ort einer Lichtquelle mindestens einen Brennpunkt aufweist.

Beispielsweise aus der EP 0 900 694 A2 und aus der DE 100 40 302 A1 sind Fahrzeugscheinwerfer bekannt, die in üblicher Weise einen Reflektor aufweisen, in dessen Brennpunkt eine Lichtquelle angeordnet ist. Dabei ist dem Reflektor an seinem Reflektorrand in Hauptabstrahlrichtung ein etwa ringförmiger Lichtleiter vorgelagert, der als ein langgestrecktes Lichtauskoppelelement ausgebildet ist. Aus der DE 100 40 302 A1 ist dabei bekannt, einen zweiten Lichtleiter bzw. ein zweites Lichtauskoppelelement einem benachbarten Fahrzeugscheinwerfer zuzuordnen. Die Lichtleiter bzw. Lichtauskoppelelemente werden dabei von einer separaten Lichtquelle beleuchtet.

Nachteilig bei den bekannten Scheinwerfern ist, dass soweit es sich bei der dem Reflektor zugeordneten Lichtquelle um eine Gasentladungslampe, beispielsweise für Tagfahrlicht, handelt, die Farbe des Tagfahrlichtes sich von der Farbe des von einer Glühlampe gespeicherten Positions- oder Standlichts des Lichtleiters unterscheidet.

Weiterhin nachteilig ist, dass durch die zusätzliche Lichtquelle und die bekannten relativ langen starren Lichtleiter der Aufbau relativ aufwendig, anfällig gegen Montageschäden und kostenintensiv ist.

Weiterhin ist aus der DE 101 15 868 A1 ein Scheinwerfer mit einem Reflektor und einer Lichtquelle zur Erzeugung eines Abblendlichtes bekannt, der ein Lichtleitelement aufweist, in das Licht der Lichtquelle eingekoppelt und im Bereich eines Reflektors eines benachbarten Scheinwerfers ausgekoppelt wird, um an dem benachbarten Scheinwerfer eine weitere Lichtfunktion zu erzeugen. Zur Einkopplung von Licht der Lichtquelle des Lichtleitelementes ist bei dem bekannten Scheinwerfer dem ersten Reflektor in Richtung einer Hauptabstrahlrichtung ein Zusatzreflektor vorgelagert, durch den von der Lichtquelle ausgesandtes Licht im Wesentlichen quer zur Hauptstrahlabrichtung des Scheinwerfers reflektiert wird.

Nachteilig bei dem letztgenannten Scheinwerfer ist, dass die Fläche des Zusatzreflektors relativ klein sein muss, um nicht in dem Strahlenbereich des ersten Reflektors eine unerwünschte Abschattung zu bilden. Verbunden mit der begrenzten Ausbildungsfreiheit des Zusatzreflektors ist somit eine begrenzte Effizienz der Lichteinkopplung in das Lichtleitelement gegeben. Eine Doppelringfunktion zweier benachbarter Scheinwerfer ist damit praktisch nur mit zwei aktiven Lichtquellen zu erzielen.

Aus der WO99/11968 ist bereits ein Scheinwerfer bekannt, bei dem die Bündelung des Lichts vor der Einspeisung in einen Lichtleiter durch eine eigens hierfür vorgesehene Sammellinse erfolgt.

Aufgabe der vorliegenden Erfindung ist es daher, einen gegenüber dem Stand der Technik einfacheren Scheinwerfer zu schaffen.

Diese Aufgabe wird durch die Merkmale des Anspruchs 1 gelöst. Weiterbildungen sind den abhängigen Ansprüchen zu entnehmen.

Dadurch, dass das reflektierende Element im Bereich der optischen Achse der Lichtquelle vorgelagert ist, wird eine unerwünschte Abschattung im Randbereich des Reflektors und damit im Randbereich des Hauptabstrahlbündels vermieden. Durch die zentrumsnahe Anordnung des reflektierenden Elementes wirkt bei einem im Reflektorbereich hohlen Hauptstrahlbündel das reflektierende Element nicht störend und trägt zu einer erwünschten Abschattung unreflektierter Strahlen der Lichtquelle bei. Durch die relativ freie Anordnung des reflektierenden Elementes wird also der vordere Bereich des Reflektors relativ unbeeinflusst vom reflektierenden Element zur Erzeugung eines Hauptabstrahlbündels genutzt, während ein zentraler hinterer Bereich des Reflektors in Verbindung mit dem reflektierenden Element der Lichteinkopplung in das Lichtleitelement dient. Die bündelnde Wirkung wird durch den Reflektor und das reflektierende Element bewirkt. Eine zusätzliche bzw. eigenständige Lichtquelle des Lichtleitelementes kann eingespart werden. Der Reflektor und damit der Bauraum des Scheinwerfers muss sich durch die zusätzliche Funktion nicht vergrößern und kann relativ flach gehalten werden. Der Aufbau des Fahrzeugscheinwerfers ist damit relativ einfach, volumensparend und kostengünstig zu verwirklichen.

Gemäß einer bevorzugten Ausführungsform der Erfindung ist das reflektierende Element als ein Spiegel ausgebildet, der gegenüber der in der Hauptabstrahlrichtung liegenden Längsachse so geneigt ist, dass von einem ersten Teilbereich des Reflektors auf den Spiegel reflektiertes Licht zur Lichteinkoppelfläche des Lichtleitelementes gelenkt wird. Dabei ist der Spiegel vorzugsweise als ein Planspiegel ausgebildet. Der Spiegel kann durch eine entsprechende Beschichtung als Kaltlichtspiegel ausgebildet sein, um dadurch die Temperaturlast am Lichtleitelement und am Spiegel zu reduzieren.

Der Planspiegel ist relativ einfach und kostengünstig aufgebaut und trägt in Verbindung mit dem auf ihn abgestimmten zentralen Bereich des Reflektors zu einem effizienten Einkoppeln von Licht der Lichtquelle in das Lichtleitelement bei.

Nach einer weiteren bevorzugten Ausführungsform der Erfindung ist dem Reflektor in seinem in Hauptabstrahlrichtung liegenden vorderen Reflektorbereich ein Lichtleiter vorgelagert, der als ein Lichtauskoppelelement ausgebildet ist, das mindestens bereichsweise einem Rand des Reflektors benachbart ist. Der Lichtleiter bzw. das Lichtauskoppelelement weist eine dem Reflektor abgewandte Lichtaustrittsfläche und eine dem Reflektor zugewandte Lichteintrittsfläche auf. Der vordere Reflektorbereich weist einen dritten Brennpunkt auf, der mit dem ersten Brennpunkt am Ort der Lichtquelle zusammenfällt. Dabei fokussiert der vordere Reflektorbereich das Licht der Lichtquelle zur Lichteintrittsfläche des Lichtauskoppelelementes hin in einer Brennlinie, die der Lichteintrittsfläche des Lichtleiters benachbart ist: Durch die Fokussierung des von der Lichtquelle abgewandten Lichtes in einer Brennlinie kann sehr effizient Licht der Lichtquelle in den Lichtleiter eingekoppelt werden. Dadurch wird es insbesondere möglich, den Lichtleiter zur Erzeugung eines Tagfahrlichtes zu nutzen. Das Tagfahrlichtbündel ist dabei als ein hohles Hauptabstrahlbündel ausgebildet.

Gemäß einer weiteren bevorzugten Ausführungsform der Erfindung ist der Reflektor von der Hauptabstrahlrichtung her gesehen kreisförmig und der Lichtleiter als ein Lichtring einer von dem Reflektor begrenzten Tagfahrlichtkammer ausgebildet.

Nach einer weiteren bevorzugten Ausführungsform der Erfindung ist das Lichtleitelement mit einem Nachbarlichtleiter eines benachbarten Scheinwerfers verbunden. Der Nachbarlichtleiter ist dabei als ein Lichtauskoppelelement ausgebildet, das mindestens bereichsweise einem Rand eines Reflektors des benachbarten Scheinwerfers benachbart bzw. vorgelagert ist.

Der Nachbarlichtleiter des benachbarten Scheinwerfers benötigt keine eigene Lichtquelle und kann Licht in der gleichen Farbe abstrahlen wie der das Lichtleitelement aufweisende Fahrzeugscheinwerfer. Der Nachbarlichtleiter kann dabei als ein Lichtring einer von dem Reflektor des benachbarten Scheinwerfers begrenzten Abblendlichtkammer ausgebildet sein.

Gemäß einer weiteren bevorzugten Ausführungsform der Erfindung ist das Lichtleitelement mit dem Nachbarlichtleiter fest verbunden. Das Lichtleitelement kann dabei an den Nachbarlichtleiter angeformt sein.

Der Nachbarlichtleiter mit dem angeformten Lichtleitelement kann zum einen kostengünstig hergestellt und zum anderen einfach und kostengünstig montiert werden. Er ist wegen seiner kurzen Länge zudem weniger anfällig gegen Bruch. Soweit das Lichtleitelement an den Nachbarlichtleiter angespritzt bzw. angeformt ist, sind weniger Medienübergänge vorhanden, so dass geringere Lichtverluste entstehen. Die Lichtleiter können insgesamt kurz gehalten werden, was ebenfalls zu einer besseren Lichtleistung beiträgt.

Die Reflektoren und Lichtleiter können grundsätzlich neben einer kreisförmigen Struktur auch eine andere, beispielsweise eine rechteckige Struktur, aufweisen.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:
- Figur 1:: eine Seitenansicht eines Scheinwerfers mit Einkopplung von Licht einer Lichtquelle in ein Lichtleitelement,
- Figur 2:: eine Vorderansicht eines Fahrzeugscheinwerfers mit benachbartem zweiten Scheinwerfer und
- Figur 3:: eine Vorderansicht eines weiteren Fahrzeugscheinwerfers mit benachbartem Scheinwerfer.

Ein Fahrzeugscheinwerfer 1 besteht im Wesentlichen aus einem Reflektor 2, einer Lichtquelle 3, einem reflektierenden Element 4 und einem Lichtleitelement 5.

Der Reflektor 2 begrenzt eine Tagfahrlichtkammer 6. Der Reflektor 2 weist eine optische Achse bzw. Längsachse 7 auf, die in einer Hauptabstrahlrichtung 8 liegt. In der Hauptabstrahlrichtung 8 ist dem Reflektor 2 ein Lichtleiter 9 vorgelagert.

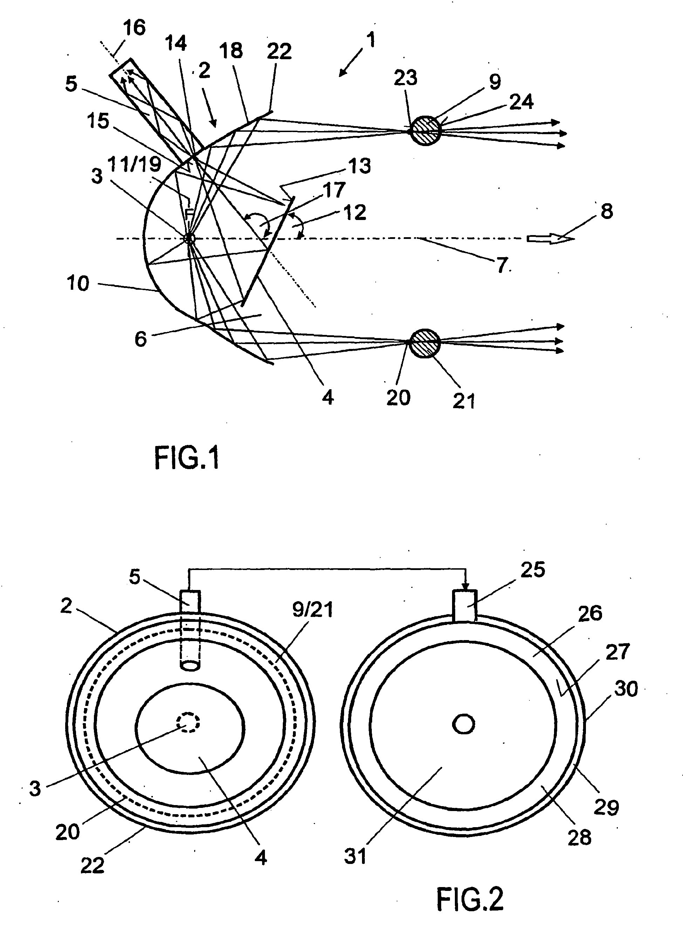

Der Reflektor 2 weist zur Hauptabstrahlrichtung 8 einen zentralen ersten Teilbereich 10 mit einen ersten Brennpunkt 11 am Ort der Lichtquelle 3 auf. Im Bereich der optischen Achse 7 ist der Lichtquelle 3 in Hauptabstrahlrichtung 8 das reflektierende Element 4 vorgelagert. Dabei bildet das reflektierende Element 4 mit der optischen Achse 7 einen Winkel 12 und ist gegenüber der optischen Achse 7 so geneigt, dass es seine dem ersten Teilbereich 10 zugewandte Reflektionsfläche 13 von dem ersten Teilbereich 10 des Reflektors 2 reflektiertes Licht der Lichtquelle 3 in einem zweiten Brennpunkt 14 bündelt, der einer Lichteinkoppelfläche 15 des Lichtleitelementes 5 benachbart ist. Das reflektierende Element 4 ist als ein Planspiegel ausgebildet (siehe Figur 1). Das in dem zweiten Brennpunkt 14 gebündelte Licht wird über die Lichteinkoppelfläche 15 in das Lichtleitelement 5 eingekoppelt und durch Totalreflexion weitergeleitet. Das Lichtelement 5 weist eine Längsachse 16 auf, die mit der optischen Achse 7 des Reflektors 2 einen stumpfen Winkel 17 bildet. Das Lichtelement 5 ist mit seiner Lichteinkoppelfläche 15 im Randbereich des ersten Teilbereiches 10 und damit benachbart zu dem sich anschließenden zweiten Teilbereich, der einen umlaufenden vorderen Reflektorbereich 18 bildet.

Der vordere Reflektorbereich 18 weist am Ort der Lichtquelle 3 einen dritten Brennpunkt 19 auf, der mit dem ersten Brennpunkt zusammenfällt und das Licht der Lichtquelle in einer in Hauptabstrahlrichtung 8 liegenden Brennlinie 20 fokussiert. Der Lichtleiter 9 ist als ein Lichtauskoppelelement 21 ausgebildet, das einem Rand 22 des Reflektors 2 benachbart ist. Das Lichtauskoppelelement 25 weist entgegengesetzt zur Hauptabstrahlrichtung 8 eine Lichteintrittsfläche 23 auf, die der Brennlinie 20 benachbart ist und über die das Licht der Lichtquelle 3 in das Lichtauskoppelelement 21 einkoppelbar ist. Der Lichteintrittsfläche 23 in Hauptabstrahlrichtung 8 gegenüberliegend weist das Lichtauskoppelelement 21 eine Lichtaustrittsfläche 24 auf, über die das Licht der Lichtquelle 3 als ein ringförmiges Tagfahrlichtbündel ausgekoppelt wird.

Das Lichtleitelement 5 ist mit einem Lichteinkoppelelement 25 eines Nachbarlichtleiters 26 verbunden. Der Nachbarlichtleiter 26 weist eine Lichtauskoppelfläche 27 auf, über die das im Lichtleitelement 5 eingekoppelte Licht ausgekoppelt wird. In bekannter Weise kann der Nachbarlichtleiter 26 an seiner der Lichtauskoppelfläche 27 gegenüberliegenden Rückseiten eine nicht dargestellte Reflexionsfläche aufweisen.

Das Lichtleitelement 5 ist mit dem Nachbarlichtleiter 26 bzw. dessen Lichteinkoppelelement 28 fest verbunden. Grundsätzlich ist es aber auch möglich, das Lichtleitelement 5 fest an den Reflektor 2 anzuordnen und über ein aufsteckbares Lichtleitelement 28 mit dem Lichteinkoppelelement 25 (siehe Figur 2) zu verbinden.

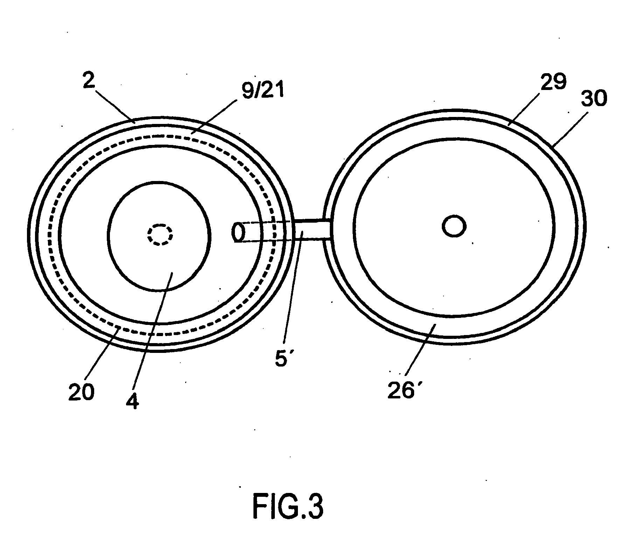

Entsprechend Figur 3 ist das Lichtleitelement 5' direkt an den Nachbarlichtleiter 26' angeformt.

Der Nachbarlichtleiter 26, 26' ist dem Nachbarreflektor 29 bzw. dessen Reflektorrand 30 benachbart vorgelagert. Der Nachbarreflektor 29 begrenzte dabei eine Abblendlichtkammer 31.

Bei eingeschaltetem Tagfahrlicht wird somit Licht der Lichtquelle 3 über den als Lichtring ausgebildeten Lichtleiter 9 der Tagfahrlichtkammer 6 und über den Nachbarlichtleiter 26, 26', der ebenfalls als Lichtring ausgebildet ist, in Verbindung mit dem Lichtleitelement 5, 5' abgestrahlt. Standlicht wird über gedimmtes Taglicht erzeugt.

## Patentansprüche

1. Fahrzeugscheinwerfer mit einem Reflektor,
- der am Ort einer Lichtquelle mindestens einen Brennpunkt aufweist,
- bei dem der Lichtquelle (3) in Richtung einer Hauptabstrahlrichtung (8) ein reflektierendes Element (4) auf der optischen Achse (7) des Reflektors (2) vorgelagert ist,
- bei dem der Reflektor (2) einen zentralen hinteren Bereich (10) und einen anschließenden umlaufenden vorderen Bereich (18) umfasst,
- bei dem nur der vordere Bereich (18) des Reflektors (2) im Wesentlichen unbeeinflusst durch das reflektierende Element (4) zur Erzeugung eines Hauptabstrahlbündels genutzt wird, und
- bei dem nur der zentrale hintere Bereich (10) des Reflektors (2) in Verbindung mit dem reflektierenden Element der Lichteinkopplung in das Lichtleitelement dient, **dadurch gekennzeichnet, dass**
- ein Teil des Lichtes der Lichtquelle (3) durch den zentralen hinteren Bereich (10) des Reflektors (2) und durch eine der Hauptabstrahlrichtung (8) abgewandte Reflektionsfläche (13) des reflektierenden Elementes (4) in einem zweiten, einer Lichteinkoppelfläche (15) eines Lichtleitelementes (5,5') benachbarten Brennpunkt (14) bündelbar und in das Lichtleitelement (5,5') einkoppelbar ist.

2. Fahrzeugscheinwerfer nach Anspruch 1,
**dadurch gekennzeichnet,**
**dass** das reflektierende Element (4) als ein Spiegel ausgebildet ist, der gegenüber der in der Hauptabstrahlrichtung (8) liegenden optischen Achse (7) geneigt ist, und dass von dem hinteren Bereich (10) des Reflektors (2) auf den Spiegel reflektiertes Licht zur Lichteinkoppelfläche (15) des Lichtleitelementes (5, 5') gelenkt wird.

3. Fahrzeugscheinwerfer nach Anspruch 2,
**dadurch gekennzeichnet,**
**dass** der Spiegel als ein Planspiegel ausgebildet ist.

4. Fahrzeugscheinwerfer nach einem der Ansprüche 1 bis 3,
**dadurch gekennzeichnet,**
**dass** dem Reflektor (2) in seinem in Hauptabstrahlrichtung (8) liegenden vorderen Bereich (18) ein Lichtleiter (9) vorgelagert ist, der als ein Lichtauskoppelelement (21) ausgebildet ist, das mindestens bereichsweise einem Rand (22) des Reflektors (2) benachbart ist, und der eine dem Reflektor (2) abgewandte Lichtaustrittsfläche (24) und eine dem Reflektor (2) zugewandte Lichteintrittsfläche (23) aufweist.

5. Fahrzeugscheinwerfer nach Anspruch 4,
**dadurch gekennzeichnet,**
**dass** der vordere Bereich (18) einen dritten Brennpunkt (19) aufweist, der mit dem ersten Brennpunkt (11) an der Lichtquelle (3) zusammenfällt, und dass der vordereBereich (18) das Licht der Lichtquelle (3) zur Lichteintrittsfläche (23) des Lichtauskoppelelementes (21) hin in einer Brennlinie (20) fokussiert.

6. Fahrzeugscheinwerfer nach Anspruch 4 oder 5,
**dadurch gekennzeichnet,**
**dass** der Lichtleiter (9) als ein Lichtring einer von dem Reflektor (2) begrenzten Tagfahrlichtkammer ausgebildet ist.

7. Fahrzeugscheinwerfer nach einem der Ansprüche 1 bis 6,
**dadurch gekennzeichnet,**
**dass** das Lichtleitelement (5, 5') mit einem Nachbarlichtleiter (26, 26') eines benachbarten Scheinwerfers verbunden ist, und dass der Nachbarlichtleiter (26, 26') als ein Lichtauskoppelelement (21) ausgebildet ist, das mindestens bereichsweise einem Rand (30) eines Reflektors (29) des benachbarten Scheinwerfers benachbart ist.

8. Fahrzeugscheinwerfer nach Anspruch 7,
**dadurch gekennzeichnet,**
**dass** der Nachbarlichtleiter (26, 26') als ein Lichtring einer von dem Reflektor (29) des benachbarten Scheinwerfers begrenzten Abblendfahrlichtkammer (31) ausgebildet ist.

9. Fahrzeugscheinwerfer nach Anspruch 7 oder 8,
**dadurch gekennzeichnet,**
**dass** das Lichtleitelement (5, 5') mit dem Nachbarlichtleiter (26, 26') fest verbunden ist.

10. Fahrzeugscheinwerfer nach einem der Ansprüche 7 bis 9,
**dadurch gekennzeichnet,**
**dass** das Lichtleitelement (28) an den Nachbarlichtleiter (26') angeformt ist.

## Claims

1. A vehicle headlight with a reflector
- which has at least one focal point at the site of a light source,
- in which a reflecting element (4) is arranged in front of the light source (3) in the direction of a main radiation direction (8) on the optical axis (7) of the reflector (2),
- in which the reflector (2) comprises a central rear region (10) and an adjacent peripheral front region (18),
- in which only the front region (18) of the reflector (2) is used, substantially uninfluenced by the reflecting element (4), to produce a main radiation bundle, and
- in which only the central rear region (10) of the reflector (2) is used in conjunction with the reflecting element of the light input into the optical waveguide element,
**characterised in that**
- a part of the light of the light source (3) can be focused by the central rear region (10) of the reflector (2) and by a reflection face (13) of the reflecting element (4) remote from the main radiation direction (8) in a second focal point (14) adjacent to a light input face (15) of an optical waveguide element (5, 5') and can be input into the optical waveguide element.

2. A vehicle headlight according to claim 1, **characterised in that** the reflecting element (4) is configured as a mirror, which is inclined relative to the optical axis (7) lying in the main radiation direction (8) and light reflected from the rear region (10) of the reflector (2) onto the mirror is directed to the light input face (15) of the optical waveguide element (5, 5').

3. A vehicle headlight according to claim 2, **characterised in that** the mirror is configured as a planar mirror.

4. A vehicle headlight according to any one of claims 1 to 3, **characterised in that** an optical waveguide (9) is arranged in front of the reflector (2) in its front region (18) lying in the main radiation direction (8), and is configured as a light output element (21), which is adjacent, at least in regions, to an edge (22) of the reflector (2), and which has a light outlet face (24) remote from the reflector (2) and a light inlet face (23) facing the reflector (2).

5. A vehicle headlight according to claim 4, **characterised in that** the front region (18) has a third focal point (19), which coincides with the first focal point (11) at the light source (3), and **in that** the front region (18) focuses the light of the light source (3) toward the light inlet face (23) of the light output element (21) in a focal line (20).

6. A vehicle headlight according to claim 4 or 5, **characterised in that** the optical waveguide (9) is configured as a light ring of a day driving light chamber limited by the reflector (2).

7. A vehicle headlight according to any one of claims 1 to 6, **characterised in that** the optical waveguide element (5, 5') is connected to a neighbouring optical waveguide (26, 26') of an adjacent headlight, and **in that** the neighbouring optical waveguide (26, 26') is configured as a light output element (21), which is adjacent, at least in regions to an edge (30) of a reflector (29) of the adjacent headlight.

8. A vehicle headlight according to claim 7, **characterised in that** the neighbouring optical waveguide (26, 26') is configured as a light ring of the dipped beam driving light chamber (31) limited by the reflector (29) of the adjacent headlight.

9. A vehicle headlight according to claim 7 or 8, **characterised in that** the optical waveguide element (5, 5') is rigidly connected to the neighbouring optical waveguide (26, 26').

10. A vehicle headlight according to any one of claims 7 to 9, **characterised in that** the optical waveguide element (28) is moulded onto the neighbouring optical waveguide (26').

## Revendications

1. Phare de véhicule comportant un réflecteur,
- ayant au moins un foyer à l'emplacement d'une source lumineuse, et
- dans la direction principale de rayonnement (8), la source lumineuse (3) comporte un élément réfléchissant (4), installé en amont sur l'axe optique (7) du réflecteur (2),
- le réflecteur (2) a une zone centrale arrière (10) et une zone périphérique avant (18), adjacente,
- seule la zone avant (18) du réflecteur (2) est pratiquement non influencée par l'élément réfléchissant (4) pour générer le faisceau principal de rayonnement, et
- seule la zone centrale arrière (10) du réflecteur (2) en liaison avec l'élément réfléchissant sert à injecter de la lumière dans l'élément de guide de lumière,
**caractérisé en ce que**
- une partie de la lumière de la source lumineuse (3) est concentrée par la zone centrale arrière (10) du réflecteur (2) et par la surface de réflexion (13) de l'élément réfléchissant (4), surface à l'opposé de la direction principale de rayonnement (8) vers un second foyer (14) voisin d'une surface d'injection de lumière (15) d'un élément de guide de lumière (5, 5') pour être injectée dans cet élément de guide de lumière (5, 5').

2. Phare de véhicule selon la revendication 1,
**caractérisé en ce que**
l'élément réfléchissant (4) est un miroir incliné par rapport à l'axe optique (7) de la direction principale de rayonnement (8), et la lumière réfléchie par la zone arrière (10) du réflecteur (2) sur le miroir est dirigée vers la surface d'injection de lumière (15) de l'élément de guide de lumière (5, 5').

3. Phare de véhicule selon la revendication 2,
**caractérisé en ce que**
le miroir est un miroir plan.

4. Phare de véhicule selon l'une des revendications 1 à 3,
**caractérisé en ce qu'**
un guide de lumière (9) est prévu devant la zone avant (18) du réflecteur (2) selon la direction principale de rayonnement (8), ce guide de lumière étant réalisé comme élément de découplage de lumière (21) voisin au moins par zone, du bord (22) du réflecteur (2) et ayant une surface de sortie de lumière (24) non tournée vers le réflecteur (2) et une surface d'entrée de lumière (23) tournée vers le réflecteur (2).

5. Phare de véhicule selon la revendication 4,
**caractérisé en ce que**
la zone avant (18) comporte un troisième foyer (19) coïncidant avec le premier foyer (11) de la source lumineuse (3), et
la zone avant (18) focalise la lumière de la source lumineuse (3) vers la surface d'entrée de lumière (23) de l'élément de découplage de lumière (21) suivant une ligne focale (20).

6. Phare de véhicule selon la revendication 4 ou 5,
**caractérisé en ce que**
le guide de lumière (9) est réalisé sous la forme d'un anneau lumineux d'une chambre lumineuse pour la circulation routière diurne, délimitée par le réflecteur (2).

7. Phare de véhicule selon l'une des revendications 1 à 6,
**caractérisé en ce que**
l'élément de guide de lumière (5, 5') est relié à un guide de lumière voisin (26, 26') d'un phare voisin et le guide de lumière voisin (26, 26') est réalisé sous la forme d'un élément de découplage de lumière (21) voisin au moins par zone, d'un bord (30) d'un réflecteur (29) du phare voisin.

8. Phare de véhicule selon la revendication 7,
**caractérisé en ce que**
le guide de lumière voisin (26, 26') est réalisé sous la forme d'un anneau lumineux d'une chambre lumineuse de feu de croisement (31), délimité par le réflecteur (29) du phare voisin.

9. Phare de véhicule selon la revendication 7 ou 8,
**caractérisé en ce que**
l'élément de guide de lumière (5, 5') est relié solidairement au guide de lumière voisin (26, 26').

10. Phare de véhicule selon l'une des revendications 7 à 9,
**caractérisé en ce que**
l'élément de guide de lumière (28) est formé sur le guide de lumière voisin (26').
